# EUROPEAN PATENT APPLICATION

(11) **EP 4 808 225 A1**
(43) Date of publication of application: **16.09.2026**
(21) Application number: 24902754.1
(22) Date of filing: 09.12.2024
(51) Int. Cl.: H04W 52/14

(54) **COMMUNICATION METHOD AND RELATED APPARATUS**

(30) Priority: 15.12.2023 CN 202311735214
(71) Applicant: Huawei Technologies Co., Ltd., Shenzhen, Guangdong 518129 (CN)
(72) Inventor: ZHANG, Zijian, Shenzhen, Guangdong 518129 (CN); GAO, Xiang, Shenzhen, Guangdong 518129 (CN); GONG, Mingxin, Shenzhen, Guangdong 518129 (CN); ZHANG, Zhening, Shenzhen, Guangdong 518129 (CN); LIU, Kunpeng, Shenzhen, Guangdong 518129 (CN)
(74) Representative: Huawei European IPR
(86) International application number: PCT/CN2024/137754
(87) International publication number: WO 2025/124333

(57) **Abstract**

This application relates to the field of wireless communication technologies, and in particular, to a communication method and a related apparatus. The method includes: receiving target information from a first network device, where the target information indicates a correction parameter; and determining target transmit power for sending a target signal to a second network device, where the target transmit power is determined based on a downlink path loss correction result, the downlink path loss correction result is determined based on the correction parameter and a downlink path loss estimation result, and the downlink path loss estimation result is determined based on a path loss compensation factor configured by the first network device and/or a downlink path loss estimation value obtained by the terminal device by measuring a downlink reference signal of the first network device. According to the method, the determined target transmit power can be more proper.

## Description

This application claims priority to Chinese Patent Application No. 202311735214.9, filed with the China National Intellectual Property Administration on December 15, 2023 and entitled "COMMUNICATION METHOD AND RELATED APPARATUS", which is incorporated herein by reference in its entirety.

### TECHNICAL FIELD

This application relates to the field of wireless communication technologies, and in particular, to a communication method and a related apparatus.

### BACKGROUND

With emergence of new network services such as video live broadcast, improvement of uplink and downlink channel capacities has become one of research hotspots. Therefore, a dense deployment scheme of transmission reception points (transmission reception points, TRPs) with only an uplink receiving capability is proposed to improve an uplink capability. Such a TRP may also be referred to as a single-uplink TRP, and may be understood as a small cell that has only an uplink receiving capability and does not have a downlink sending capability. It should be understood that, the single-uplink TRP generally needs to be associated with a network device for use, and a terminal device may implement downlink reception via the network device.

In uplink receiving and sending processes, the terminal device needs to properly adjust transmit power of an uplink signal to compensate for impact caused by a path loss and shadow fading. In a conventional technology, the terminal device adjusts transmit power of an uplink signal based on a path loss obtained by measuring a downlink path loss reference signal of a network device associated with the single-uplink TRP. However, a path loss between the terminal device and the single-uplink TRP is usually different from the path loss between the terminal device and the network device associated with the single-uplink TRP. Therefore, in the foregoing manner, the adjusted transmit power may be excessively high or excessively low. As a result, interference in a communication system is more severe, and communication quality is affected.

### SUMMARY

To resolve the foregoing problem, this application provides a communication method and a related apparatus, so that a terminal device can determine more proper uplink transmit power.

The following describes this application from a plurality of aspects. It is easy to understand that implementations of the plurality of aspects may be mutually referenced.

According to a first aspect, this application provides a communication method. The communication method is applicable to a terminal device. The method includes: receiving target information from a first network device, where the target information indicates a correction parameter; and determining target transmit power for sending a target signal to a second network device, where the target transmit power is determined based on a downlink path loss correction result, the downlink path loss correction result is determined based on the correction parameter and a downlink path loss estimation result, and the downlink path loss estimation result is determined based on a path loss compensation factor configured by the first network device and/or a downlink path loss estimation value obtained by the terminal device by measuring a downlink reference signal of the first network device.

In the foregoing implementation, the terminal device corrects the downlink path loss estimation result with reference to the correction parameter configured by the first network device, so that the target transmit power determined by the terminal device can be more proper and reliable, and impact caused by the path loss and shadow fading can be more effectively compensated. Uplink transmit power for a single-uplink TRP is determined by using the method provided in this application, so that a problem that the determined transmit power may be excessively high or excessively low in an existing solution can be resolved, and transmission quality of an uplink between the terminal device and the single-uplink TRP can be ensured.

According to a second aspect, this application provides a communication method. The communication method is applicable to a first network device. The method includes: determining target information indicating a correction parameter, where the correction parameter and a downlink path loss estimation result are used to determine a downlink path loss correction result, the downlink path loss correction result is used to determine target transmit power for sending a target signal by a terminal device to a second network device, and the downlink path loss estimation result is determined based on a path loss compensation factor configured by the first network device and/or a downlink path loss estimation value obtained by the terminal device by measuring a downlink reference signal of the first network device; and sending the target information to the terminal device.

With reference to at least one of the first aspect and the second aspect, in a possible implementation, the correction parameter includes a first correction parameter, and the downlink path loss correction result satisfies the following formula: ${P}_{X} = α \times \left(PL+{PL}_{offset}\right)$

P_{X} is the downlink path loss correction result, α is the path loss compensation factor, PL is the downlink path loss estimation value, and PL_{offset} is the first correction parameter.

With reference to at least one of the first aspect and the second aspect, in a possible implementation, the correction parameter includes a first correction parameter, and the downlink path loss correction result satisfies the following formula: ${P}_{X} = PL + {PL}_{offset}$

P_{X} is the downlink path loss correction result, PL is the downlink path loss estimation value, and PL_{offset} is the first correction parameter.

With reference to at least one of the first aspect and the second aspect, in a possible implementation, the second network device is a single-uplink device and the first network device and the second network device do not perform joint reception, or the second network device is a single-uplink device, the terminal device performs uplink communication only with the second network device and signal reception quality of the second network device is higher than signal reception quality of the first network device, and a value of PL_{offset} is less than 0.

With reference to at least one of the first aspect and the second aspect, in a possible implementation, the second network device is a single-uplink device, and the first network device and the second network device perform joint reception and a transmission loss between the terminal device and the first network device is less than a transmission loss between the terminal device and the second network device, or the second network device is a single-uplink device and the terminal device performs uplink communication with both the first network device and the second network device, and a value of PL_{offset} is greater than 0.

With reference to at least one of the first aspect and the second aspect, in a possible implementation, the second network device is a non-single-uplink device, or the second network device and the first network device are a same device, or the second network device is a single-uplink device, the terminal device performs uplink communication only with the first network device and signal reception quality of the first network device is higher than signal reception quality of the second network device, and a value of PL_{offset} is 0.

With reference to at least one of the first aspect and the second aspect, in a possible implementation, the correction parameter includes a second correction parameter, and the downlink path loss correction result satisfies the following formula: ${P}_{X} = α \times PL \times {β}_{PL}$

P_{X} is the downlink path loss correction result, α is the path loss compensation factor, PL is the downlink path loss estimation value, and β_{PL} is the second correction parameter.

With reference to at least one of the first aspect and the second aspect, in a possible implementation, the correction parameter includes a second correction parameter, and the downlink path loss correction result satisfies the following formula: ${P}_{X} = PL \times {β}_{PL}$

P_{X} is the downlink path loss correction result, PL is the downlink path loss estimation value, and β_{PL} is the second correction parameter.

With reference to at least one of the first aspect and the second aspect, in a possible implementation, the second network device is a single-uplink device and the first network device and the second network device do not perform joint reception, or the second network device is a single-uplink device, the terminal device performs uplink communication only with the second network device and signal reception quality of the second network device is higher than signal reception quality of the first network device, and a value of β_{PL} is greater than 0 and less than 1.

With reference to at least one of the first aspect and the second aspect, in a possible implementation, the second network device is a single-uplink device, and the first network device and the second network device perform joint reception and a transmission loss between the terminal device and the first network device is less than a transmission loss between the terminal device and the second network device, or the second network device is a single-uplink device and the terminal device performs uplink communication with both the first network device and the second network device, and a value of β_{PL} is greater than 1.

With reference to at least one of the first aspect and the second aspect, in a possible implementation, the second network device is a non-single-uplink device, or the second network device and the first network device are a same device, or the second network device is a single-uplink device, the terminal device performs uplink communication only with the first network device and signal reception quality of the first network device is higher than signal reception quality of the second network device, and a value of β_{PL} is 1.

With reference to at least one of the first aspect and the second aspect, in a possible implementation, the correction parameter includes a first correction parameter and a second correction parameter, and the downlink path loss correction result satisfies the following formula: ${P}_{X} = α \times PL + {PL}_{offset} \times {β}_{PL}$

P_{X} is the downlink path loss correction result, α is the path loss compensation factor, PL is the downlink path loss estimation value, PL_{offset} is the first correction parameter, and β_{PL} is the second correction parameter.

With reference to at least one of the first aspect and the second aspect, in a possible implementation, the correction parameter includes a first correction parameter and a second correction parameter, and the downlink path loss correction result satisfies the following formula: ${P}_{X} = PL + {PL}_{offset} \times {β}_{PL}$

P_{X} is the downlink path loss correction result, PL is the downlink path loss estimation value, PL_{offset} is the first correction parameter, and β_{PL} is the second correction parameter.

With reference to at least one of the first aspect and the second aspect, in a possible implementation, the second network device is a single-uplink device and the first network device and the second network device do not perform joint reception, or the second network device is a single-uplink device, the terminal device performs uplink communication only with the second network device and signal reception quality of the second network device is higher than signal reception quality of the first network device, a value of β_{PL} is greater than 0 and less than 1, and a value of PL_{offset} is less than 0.

With reference to at least one of the first aspect and the second aspect, in a possible implementation, the second network device is a single-uplink device, and the first network device and the second network device perform joint reception and a transmission loss between the terminal device and the first network device is less than a transmission loss between the terminal device and the second network device, or the second network device is a single-uplink device and the terminal device performs uplink communication with both the first network device and the second network device, a value of β_{PL} is greater than 1, and a value of PL_{offset} is greater than 0.

With reference to at least one of the first aspect and the second aspect, in a possible implementation, the second network device is a non-single-uplink device, or the second network device and the first network device are a same device, or the second network device is a single-uplink device, the terminal device performs uplink communication only with the first network device and signal reception quality of the first network device is higher than signal reception quality of the second network device, a value of β_{PL} is 1, and a value of PL_{offset} is 0.

With reference to at least one of the first aspect and the second aspect, in a possible implementation, the correction parameter is determined based on a difference between a path loss from the terminal device to the first network device and a path loss from the terminal device to the second network device, and/or a ratio of the path loss from the terminal device to the first network device to the path loss from the terminal device to the second network device.

According to a third aspect, this application provides a communication apparatus. The communication apparatus may be the terminal device mentioned in the first aspect. The communication apparatus includes a transceiver unit and a processing unit. The transceiver unit is configured to receive target information from a first network device. The target information indicates a correction parameter. The processing unit is configured to determine target transmit power for sending a target signal to a second network device, where the target transmit power is determined based on a downlink path loss correction result, the downlink path loss correction result is determined based on the correction parameter and a downlink path loss estimation result, and the downlink path loss estimation result is determined based on a path loss compensation factor configured by the first network device and/or a downlink path loss estimation value obtained by the terminal device by measuring a downlink reference signal of the first network device.

According to a fourth aspect, this application provides a communication apparatus. The communication apparatus may be the first network device mentioned in the second aspect. The communication apparatus includes a transceiver unit and a processing unit. The processing unit is configured to determine target information indicating a correction parameter. The correction parameter and a downlink path loss estimation result are used to determine a downlink path loss correction result, the downlink path loss correction result is used to determine target transmit power for sending a target signal by a terminal device to a second network device, and the downlink path loss estimation result is determined based on a path loss compensation factor configured by the first network device and/or a downlink path loss estimation value obtained by the terminal device by measuring a downlink reference signal of the first network device. The transceiver unit is configured to send the target information to the terminal device.

With reference to at least one of the third aspect and the fourth aspect, in a possible implementation, the correction parameter includes a first correction parameter, and the downlink path loss correction result satisfies the following formula: ${P}_{X} = α \times \left(PL+{PL}_{offset}\right)$

P_{X} is the downlink path loss correction result, α is the path loss compensation factor, PL is the downlink path loss estimation value, and PL_{offset} is the first correction parameter.

With reference to at least one of the third aspect and the fourth aspect, in a possible implementation, the correction parameter includes a first correction parameter, and the downlink path loss correction result satisfies the following formula: ${P}_{X} = PL + {PL}_{offset}$

P_{X} is the downlink path loss correction result, PL is the downlink path loss estimation value, and PL_{offset} is the first correction parameter.

With reference to at least one of the third aspect and the fourth aspect, in a possible implementation, the second network device is a single-uplink device and the first network device and the second network device do not perform joint reception, or the second network device is a single-uplink device, the terminal device performs uplink communication only with the second network device and signal reception quality of the second network device is higher than signal reception quality of the first network device, and a value of PL_{offset} is less than 0.

With reference to at least one of the third aspect and the fourth aspect, in a possible implementation, the second network device is a single-uplink device, and the first network device and the second network device perform joint reception and a transmission loss between the terminal device and the first network device is less than a transmission loss between the terminal device and the second network device, or the second network device is a single-uplink device and the terminal device performs uplink communication with both the first network device and the second network device, and a value of PL_{offset} is greater than 0.

With reference to at least one of the third aspect and the fourth aspect, in a possible implementation, the second network device is a non-single-uplink device, or the second network device and the first network device are a same device, or the second network device is a single-uplink device, the terminal device performs uplink communication only with the first network device and signal reception quality of the first network device is higher than signal reception quality of the second network device, and a value of PL_{offset} is 0.

With reference to at least one of the third aspect and the fourth aspect, in a possible implementation, the correction parameter includes a second correction parameter, and the downlink path loss correction result satisfies the following formula: ${P}_{X} = α \times PL \times {β}_{PL}$

P_{X} is the downlink path loss correction result, α is the path loss compensation factor, PL is the downlink path loss estimation value, and β_{PL} is the second correction parameter.

With reference to at least one of the third aspect and the fourth aspect, in a possible implementation, the correction parameter includes a second correction parameter, and the downlink path loss correction result satisfies the following formula: ${P}_{X} = PL \times {β}_{PL}$

P_{X} is the downlink path loss correction result, PL is the downlink path loss estimation value, and β_{PL} is the second correction parameter.

With reference to at least one of the third aspect and the fourth aspect, in a possible implementation, the second network device is a single-uplink device and the first network device and the second network device do not perform joint reception, or the second network device is a single-uplink device, the terminal device performs uplink communication only with the second network device and signal reception quality of the second network device is higher than signal reception quality of the first network device, and a value of β_{PL} is greater than 0 and less than 1.

With reference to at least one of the third aspect and the fourth aspect, in a possible implementation, the second network device is a single-uplink device, and the first network device and the second network device perform joint reception and a transmission loss between the terminal device and the first network device is less than a transmission loss between the terminal device and the second network device, or the second network device is a single-uplink device and the terminal device performs uplink communication with both the first network device and the second network device, and a value of β_{PL} is greater than 1.

With reference to at least one of the third aspect and the fourth aspect, in a possible implementation, the second network device is a non-single-uplink device, or the second network device and the first network device are a same device, or the second network device is a single-uplink device, the terminal device performs uplink communication only with the first network device and signal reception quality of the first network device is higher than signal reception quality of the second network device, and a value of β_{PL} is 1.

With reference to at least one of the third aspect and the fourth aspect, in a possible implementation, the correction parameter includes a first correction parameter and a second correction parameter, and the downlink path loss correction result satisfies the following formula: ${P}_{X} = α \times PL + {PL}_{offset} \times {β}_{PL}$

P_{X} is the downlink path loss correction result, α is the path loss compensation factor, PL is the downlink path loss estimation value, PL_{offset} is the first correction parameter, and β_{PL} is the second correction parameter.

With reference to at least one of the third aspect and the fourth aspect, in a possible implementation, the correction parameter includes a first correction parameter and a second correction parameter, and the downlink path loss correction result satisfies the following formula: ${P}_{X} = PL + {PL}_{offset} \times {β}_{PL}$

P_{X} is the downlink path loss correction result, PL is the downlink path loss estimation value, PL_{offset} is the first correction parameter, and β_{PL} is the second correction parameter.

With reference to at least one of the third aspect and the fourth aspect, in a possible implementation, the second network device is a single-uplink device and the first network device and the second network device do not perform joint reception, or the second network device is a single-uplink device, the terminal device performs uplink communication only with the second network device and signal reception quality of the second network device is higher than signal reception quality of the first network device, a value of β_{PL} is greater than 0 and less than 1, and a value of PL_{offset} is less than 0.

With reference to at least one of the third aspect and the fourth aspect, in a possible implementation, the second network device is a single-uplink device, and the first network device and the second network device perform joint reception and a transmission loss between the terminal device and the first network device is less than a transmission loss between the terminal device and the second network device, or the second network device is a single-uplink device and the terminal device performs uplink communication with both the first network device and the second network device, a value of β_{PL} is greater than 1, and a value of PL_{offset} is greater than 0.

With reference to at least one of the third aspect and the fourth aspect, in a possible implementation, the second network device is a non-single-uplink device, or the second network device and the first network device are a same device, or the second network device is a single-uplink device, the terminal device performs uplink communication only with the first network device and signal reception quality of the first network device is higher than signal reception quality of the second network device, a value of β_{PL} is 1, and a value of PL_{offset} is 0.

With reference to at least one of the third aspect and the fourth aspect, in a possible implementation, the correction parameter is determined based on a difference between a path loss from the terminal device to the first network device and a path loss from the terminal device to the second network device, and/or a ratio of the path loss from the terminal device to the first network device to the path loss from the terminal device to the second network device.

According to a fifth aspect, this application provides a computer program product. The computer program product includes instructions. When the instructions are run on a computer, the computer is enabled to perform the method in the first aspect or any possible implementation of the first aspect, or perform the method in the second aspect or any possible implementation of the second aspect.

According to a sixth aspect, this application provides a computer-readable storage medium. The computer-readable storage medium stores a computer program. When being executed, the computer program is used to perform the method in the first aspect or any possible implementation of the first aspect, or perform the method in the second aspect or any possible implementation of the second aspect.

According to a seventh aspect, this application provides a communication apparatus, including at least one processor and a memory. The memory is configured to store a computer program. The processor is configured to execute the computer program stored in the memory, so that the communication apparatus performs the method in the first aspect or any possible implementation of the first aspect, or performs the method in the second aspect or any possible implementation of the second aspect.

According to an eighth aspect, an embodiment of this application provides a chip, including a processor and an interface. The input/output interface is configured to exchange information or data, and the processing circuit is configured to run instructions, so that an apparatus in which the chip is installed performs the method in the first aspect or any possible implementation of the first aspect, or performs the method in the second aspect or any possible implementation of the second aspect.

According to a ninth aspect, this application provides a chip system. The chip system includes a processor, configured to support an apparatus in which the chip system is installed in performing the method in the first aspect or any possible implementation of the first aspect, or performing the method in the second aspect or any possible implementation of the second aspect, for example, generating or processing data and/or information in the foregoing method. In a possible design, the chip system further includes a memory. The memory is configured to store program instructions and data that are necessary for a data sending device. The chip system may include a chip, or may include a chip and another discrete component.

According to a tenth aspect, this application provides a communication system. The communication system includes a terminal device that has a function of implementing the method and the possible designs in the first aspect and a plurality of network devices that have a function of implementing the method and the possible designs in the second aspect.

In the communication method provided in this application, the terminal device may correct the downlink path loss estimation result based on the correction parameter provided by the first network device, to obtain the downlink path loss correction result, and further determine more proper target transmit power based on the downlink path loss correction result.

### BRIEF DESCRIPTION OF DRAWINGS

FIG. 1 is a diagram of a structure of a communication system according to this application;
FIG. 2 is a schematic flowchart of a communication method according to this application;
FIG. 3 is a diagram of a structure of a communication apparatus according to this application;
FIG. 4 is a diagram of a structure of still another communication apparatus according to this application; and
FIG. 5 is a diagram of a structure of still another communication apparatus according to this application.

### DESCRIPTION OF EMBODIMENTS

The following clearly describes technical solutions in embodiments of this application with reference to accompanying drawings in embodiments of this application.

In embodiments of this application, unless otherwise stated or there is a logic conflict, terms and/or descriptions in different embodiments are consistent and may be mutually referenced, and technical features in different embodiments may be combined based on an internal logic relationship thereof, to form a new embodiment.

In this application, at least one means one or more, and a plurality of means two or more. The term "and/or" describes an association relationship between associated objects and indicates that three relationships may exist. For example, A and/or B may indicate the following cases: Only A exists, both A and B exist, and only B exists. A and B may be singular or plural. In the text descriptions of this application, the character "/" represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

The technical solutions in embodiments of this application may be applied to various communication systems, for example, a long term evolution (Long Term Evolution, LTE) system, an LTE frequency division duplex (frequency division duplex, FDD) system, an LTE time division duplex (time division duplex, TDD) system, a universal mobile telecommunications system (Universal Mobile Telecommunications System, UMTS), a worldwide interoperability for microwave access (Worldwide Interoperability for Microwave Access, WiMAX) communication system, a 5th generation (5th generation, 5G) system, or a new radio (new radio, NR) system. In addition, the technical solutions may be further applied to a subsequent evolved system, for example, a 6th generation 6G communication system, or even a higher 7th generation 7G communication system.

A network device in embodiments of this application may be a device for communicating with a terminal device, may be a base station, an access point, or a network device, or may be a device that communicates with a wireless terminal over an air interface in an access network by using one or more sectors. The network device may be configured to mutually convert a received over-the-air frame and an IP packet and serve as a router between the wireless terminal and a remaining portion of the access network, where the remaining portion of the access network may include an Internet protocol (IP) network. The network device may further coordinate attribute management of the air interface. For example, the network device may be an evolved NodeB (evolved NodeB, eNB, or eNodeB) in an LTE system, or may be a radio controller in a cloud radio access network (cloud radio access network, CRAN) scenario, or the access device may be a relay station, an access point, a vehicle-mounted device, a wearable device, an access device in a future 5G network, a network device in a future evolved PLMN network, or the like, may be an access point (access point, AP) in a WLAN, or may be a gNB in a new radio (new radio, NR) system. This is not limited in embodiments of this application. It should be noted that, for the 5G system, there may be one or more transmission reception points (transmission reception points, TRPs) under one base station, all TRPs belong to a same macro cell, and the macro cell is managed by the base station. Each TRP and each terminal device may use the communication method in embodiments of this application.

In addition, in embodiments of this application, the network device may be a device in an access network (radio access network, RAN), in other words, a RAN node that connects the terminal device to a wireless network. For example, by way of example, and not limitation, the network device may be a gNB, a TRP, an evolved NodeB (evolved NodeB, eNB), a radio network controller (radio network controller, RNC), a NodeB (NodeB, NB), a base station controller (base station controller, BSC), a base transceiver station (base transceiver station, BTS), a home evolved NodeB (for example, a home evolved NodeB or a home NodeB, HNB), a baseband unit (baseband unit, BBU), or a wireless fidelity (wireless fidelity, Wi-Fi) access point (access point, AP).

The network device may serve a cell. The terminal device communicates with the network device on a transmission resource (for example, a frequency domain resource, or in other words, a frequency spectrum resource) used for the cell. The cell may be a cell corresponding to the network device (for example, a base station). The cell may belong to a macro base station, or a base station corresponding to a small cell (small cell). The small cell herein may include a metro cell (metro cell), a micro cell (micro cell), a pico cell (pico cell), a femto cell (femto cell), or the like. These small cells have features of small coverage and low transmit power, and are applicable to providing a high-speed data transmission service.

The terminal device in embodiments of this application may also be referred to as user equipment (UE), a mobile station (mobile station, MS), a mobile terminal (mobile terminal, MT), an access terminal, a subscriber unit, a subscriber station, a mobile station, a remote station, a remote terminal, a mobile device, a user terminal, a terminal, a wireless communication device, a user agent, a user apparatus, or the like.

The terminal device may be a device that provides voice/data connectivity for a user, for example, a handheld device or a vehicle-mounted device with a wireless connection function. Currently, examples of some terminals are as follows: a mobile phone (mobile phone), a tablet computer, a notebook computer, a handheld computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a compute device or another processing device connected to a wireless modem, a vehicle-mounted device, a wearable device, a terminal device in a 5G network, a terminal device in a future evolved public land mobile network (public land mobile network, PLMN), and the like. This is not limited in this embodiment of this application.

As an example rather than a limitation, in embodiments of this application, the wearable device may also be referred to as a wearable intelligent device, and is a general name of a wearable device developed by intelligently designing daily wear through a wearable technology, such as glasses, gloves, watches, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In addition, in embodiments of this application, the terminal device may alternatively be a terminal device in an internet of things (internet of things, IoT) system. An IoT is an important part of future development of information technology. A main technical feature of the IoT is to connect things to a network by using a communication technology, to implement an intelligent network for human-machine interconnection or thing-thing interconnection.

In embodiments of this application, the terminal device may further include a relay (relay). Alternatively, it is understood that any device that can perform data communication with the base station may be considered as the terminal device.

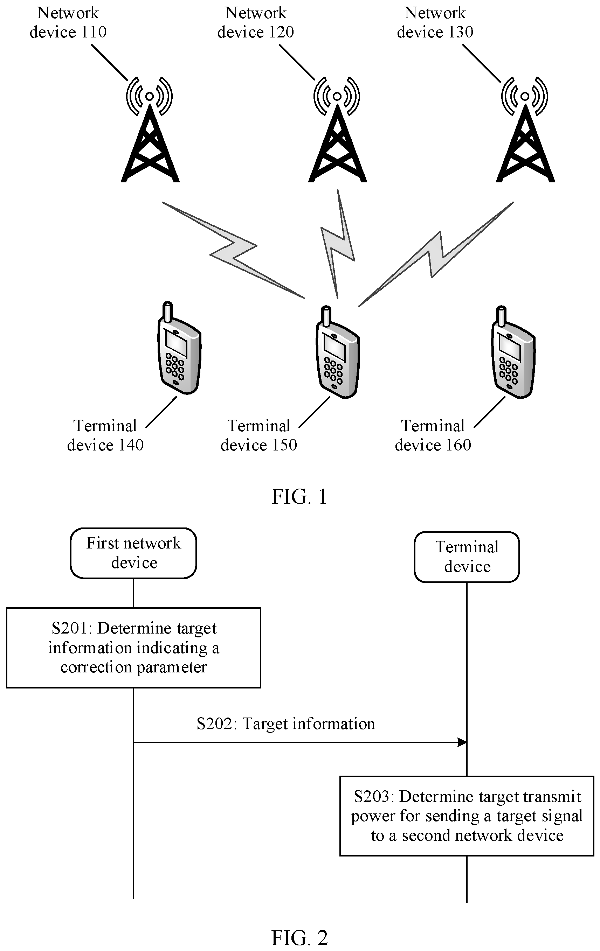

FIG. 1 is a diagram of a structure of a communication system according to this application. As shown in FIG. 1, a plurality of network devices (a network device 110, a network device 120, and a network device 130) and a plurality of terminal devices (a terminal device 140, a terminal device 150, and a terminal device 160) form a communication system.

Optionally, a plurality of network devices may simultaneously serve one terminal device. For example, the network device 110, the network device 120, and the network device 130 simultaneously serve the terminal device 150. Any two of the network device 110, the network device 120, and the network device 130 may exchange data/information. This communication manner is a multi-station collaboration manner.

The network device in FIG. 1 may be a base station. The network device corresponds to a different device in a different system. For example, the network device may correspond to an eNB in a 4G system, and correspond to a 5G network device, for example, a gNB in a 5G system. The technical solutions provided in this application may also be applied to a future mobile communication system. Therefore, the network device in FIG. 1 may also correspond to a network device in the future mobile communication system. In FIG. 1, for example, the network device is a base station. Actually, based on the foregoing description, the network device may alternatively be a device, for example, an RSU.

It should be understood that the communication system shown in FIG. 1 may further include more network nodes, for example, other terminal devices or network devices. The network devices or the terminal devices included in the communication system shown in FIG. 1 may be the network devices or the terminal devices in the foregoing various forms. Details are not shown one by one in the figure in this embodiment of this application. Similarly, the foregoing communication system architecture applicable to embodiments of this application is merely an example for description, and the communication system architecture applicable to embodiments of this application is not limited thereto. Any communication system architecture that can implement functions of the foregoing devices is also applicable to embodiments of this application.

In a conventional technology, in a scenario in which single uplink TRPs are densely deployed, the terminal device adjusts transmit power of an uplink signal based on a path loss obtained by measuring a downlink path loss reference signal of a network device associated with the single-uplink TRP. Because a path loss between the terminal device and the single-uplink TRP is usually different from the path loss between the terminal device and the network device associated with the single-uplink TRP, in the foregoing manner the adjusted transmit power may be excessively high or excessively low. As a result, interference in a communication system is more severe, and communication quality is affected.

Therefore, a technical problem to be resolved in this application is: How to properly determine uplink transmit power for the single-uplink TRP.

To resolve the foregoing technical problem, this application provides a communication method. In the communication method, a first network device configures a correction parameter for a terminal device. The terminal device may correct, with reference to the correction parameter, a downlink path loss estimation result that is between a second network device and the terminal device and that is obtained by the terminal device, to obtain a downlink path loss correction result that better matches an actual downlink path loss between the second network device and the terminal device, and further calculate, based on the downlink path loss correction result, target transmit power for sending a target signal to the second network device. In the communication method, because the downlink path loss estimation result is corrected with reference to the correction parameter configured by the first network device, the target transmit power finally obtained by the terminal device is more proper, and impact caused by the path loss and shadow fading can be more effectively compensated. Uplink transmit power for a single-uplink TRP is determined by using the method, so that a problem that the determined transmit power may be excessively high or excessively low in an existing solution can be resolved, and transmission quality of an uplink between the terminal device and the single-uplink TRP can be ensured.

FIG. 2 is a schematic flowchart of a communication method according to this application. As shown in FIG. 2, the communication method provided in this application may include the following steps.

S201: A first network device determines target information indicating a correction parameter.

In some feasible implementations, the first network device may determine a correction parameter used by a terminal device to determine target transmit power, and generate target information indicating the correction parameter. The target transmit power is transmit power at which the terminal device sends a target signal to a second network device. It should be understood that in this embodiment of this application, there may be one or more second network devices, and the second network device may also include the first network device.

In specific implementation, the first network device may first determine a difference between a path loss from the terminal device to the first network device and a path loss from the terminal device to the second network device, and/or a ratio of the path loss from the terminal device to the first network device to the path loss from the terminal device to the second network device, and determine the correction parameter based on the difference between the path losses and/or the ratio of the path losses. Then, the first network device may generate target information that can indicate the correction parameter.

In a first optional implementation, the correction parameter may specifically include a first correction parameter.

In this case, the first network device may determine, based on prior information, the difference between the path loss from the terminal device to the first network device and the path loss from the terminal device to the second network device. The prior information includes at least location information of the terminal device, location information of the first network device, and location information of the second network device. For example, the first network device may calculate a first path loss value between the first network device and the terminal device based on the location information of the first network device and the location information of the terminal device, or the first network device may calculate a second path loss value between the second network device and the terminal device based on the location information of the second network device and the location information of the terminal device, and determine a difference between the first path loss value and the second path loss value as the difference between the path losses. Further, the first network device may determine the difference between the path losses obtained by the first network device as the first correction parameter.

In the foregoing implementation, the method for determining the first correction parameter based on the location information of the terminal device, the location information of the first network device, and the location information of the second network device is simple and easy to implement.

Alternatively, the first network device may determine, based on a measurement result of an uplink reference signal, the difference between the path loss from the terminal device to the first network device and the path loss from the terminal device to the second network device. For example, the terminal device sends a sounding reference signal (sounding reference signal, SRS). The first network device may receive the SRS and obtain a first reference signal level through measurement, and the second network device may also receive the SRS and obtain a second reference signal level through measurement. The first network device may obtain the second reference signal level, and determine a difference between the first reference signal level and the second reference signal level as the difference between the path losses. Further, the first network device may determine the difference between the path losses obtained by the first network device as the first correction parameter.

In the foregoing implementation, the method for determining the first correction parameter based on the measurement result of the uplink reference signal is simple, and can ensure that the determined second correction parameter is proper and reliable.

Optionally, the second network device is a single-uplink device and the first network device and the second network device do not perform joint reception, or the second network device is a single-uplink device, the terminal device performs uplink communication only with the second network device and signal reception quality of the second network device is higher than signal reception quality of the first network device. In these cases, a value of the first correction parameter (which is represented by PL_{offset} in the following) is less than 0.

Optionally, the second network device is a single-uplink device, and the first network device and the second network device perform joint reception and a transmission loss between the terminal device and the first network device is less than a transmission loss between the terminal device and the second network device, or the second network device is a single-uplink device and the terminal device performs uplink communication with both the first network device and the second network device, and a value of PL_{offset} is greater than 0.

Optionally, the second network device is a non-single-uplink device, or the second network device and the first network device are a same device, or the second network device is a single-uplink device, the terminal device performs uplink communication only with the first network device and signal reception quality of the first network device is higher than signal reception quality of the second network device, and a value of PL_{offset} is 0.

In other words, in a scenario in which no single-uplink TRP is deployed, or the target signal is sent to the first network device, or the terminal device performs uplink communication only with the first network device with better signal reception quality, the terminal device may adjust the uplink transmit power by using an existing solution. In this case, a value of *PL_{offset}* may be 0. However, in a general scenario in which a single-uplink TRP is deployed (herein, the second network device is a single-uplink TRP, the first network device is a network device associated with the single-uplink TRP, and may also be referred to as a macro base station, and the first network device may be used by the terminal device to perform downlink reception) and the network device does not perform joint reception with the single-uplink TRP, or when the terminal device performs uplink communication only with the second network device with better signal reception quality, because a main function of the single-uplink TRP is to supplement uplink coverage, a path loss of the terminal device facing the single-uplink TRP is usually less than a path loss of the terminal device facing the macro base station. In this case, a value of *PL_{offset}* may be less than 0, and a favorable compromise between facing the macro base station and facing the single-uplink TRP can be implemented. However, in a scenario in which a single-uplink TRP is deployed, when the single-uplink TRP performs joint reception with the macro base station, and the terminal is closer to the macro base station, a path loss of the terminal device facing the single-uplink TRP is greater than a path loss of the terminal device facing the macro base station, or when the second network device is a single-uplink device and the terminal device performs uplink communication with both the first network device and the second network device, a value of *PL_{offset}* may be greater than 0, and a favorable compromise between facing the macro base station and facing the single-uplink TRP can be implemented. In short, in the solution provided in this application, adaptation to different communication scenarios may be implemented by adjusting a value range of *PL_{offset}*, and flexibility is high.

It should be understood that the foregoing value setting condition of PL_{offset} is merely an example. In actual implementation, in another possible value setting condition, PL_{offset} may also use the foregoing value range. This is not limited in this application.

Optionally, in actual implementation, the first network device may perform bit quantization on the value of *PL_{offset}* to obtain quantized *PL_{offset}*, and further indicate the quantized *PL_{offset}* by the target information. For example, a value interval range of the quantized *PL_{offset}* may be [-226, 226], a step is 2, and a unit is dB.

Alternatively, after obtaining the quantized *PL_{offset}*, the first network device may further perform interval mapping on a value of the quantized *PL_{offset}*, and indicate a value of mapped *PL_{offset}* by the target information. For example, it is assumed that a value range of the quantized *PL_{offset}* is [-226, 226]. In this case, the first network device may map a value of the quantized *PL_{offset}* to [-113, 113], to obtain mapped *PL_{offset}*. A step of the mapped *PL_{offset}* may be 1, and a unit is dB.

In a second optional implementation, the correction parameter may specifically include a second correction parameter.

In this case, the first network device may determine, based on prior information, the ratio of the path loss from the terminal device to the first network device to the path loss from the terminal device to the second network device. The prior information includes at least location information of the terminal device, location information of the first network device, and location information of the second network device. For example, the first network device may calculate a first path loss value between the first network device and the terminal device based on the location information of the first network device and the location information of the terminal device, or the first network device may calculate a second path loss value between the network device and the terminal device based on the location information of the second network device and the location information of the terminal device, and determine a ratio of the first path loss value to the second path loss value as the ratio of the path loss. Further, the first network device may determine the ratio of the path loss obtained by the first network device as the second correction parameter.

In the foregoing implementation, the method for determining the second correction parameter based on the location information of the terminal device, the location information of the first network device, and the location information of the second network device is simple and easy to implement.

Alternatively, the first network device may determine, based on a measurement result of an uplink reference signal, the ratio of the path loss from the terminal device to the first network device to the path loss from the terminal device to the second network device. For example, the terminal device may send a sounding reference signal (sounding reference signal, SRS). The first network device may receive the SRS and obtain a first reference signal level through measurement, and the second network device may also receive the SRS and obtain a second reference signal level through measurement. The first network device may obtain the second reference signal level, and determine a ratio of the first reference signal level to the second reference signal level as the ratio of the path loss. Further, the first network device may determine the ratio of the path loss obtained by the first network device as the second correction parameter.

In the foregoing implementation, the method for determining the second correction parameter based on the measurement result of the uplink reference signal is simple, and can ensure that the determined second correction parameter is proper and reliable.

Optionally, the second network device is a single-uplink device and the first network device and the second network device do not perform joint reception, or the second network device is a single-uplink device, the terminal device performs uplink communication only with the second network device and signal reception quality of the second network device is higher than signal reception quality of the first network device. In these cases, a value of the second correction parameter (which is represented by β_{PL} in the following) is greater than 0 and less than 1.

Optionally, the second network device is a single-uplink device, and the first network device and the second network device perform joint reception and a transmission loss between the terminal device and the first network device is less than a transmission loss between the terminal device and the second network device, or the second network device is a single-uplink device and the terminal device performs uplink communication with both the first network device and the second network device, and a value of β_{PL} is greater than 1.

Optionally, the second network device is a non-single-uplink device, or the second network device and the first network device are a same device, or the second network device is a single-uplink device, the terminal device performs uplink communication only with the first network device and signal reception quality of the first network device is higher than signal reception quality of the second network device, and a value of β_{PL} is equal to 1.

In other words, in a scenario in which no single-uplink TRP is deployed, or the target signal is sent to the first network device, or the terminal device performs uplink communication only with the first network device with better signal reception quality, the terminal device may adjust the uplink transmit power by using an existing solution. In this case, a value of β_{PL} is equal to 1. However, in a general scenario in which a single-uplink TRP is deployed (herein, the second network device is a single-uplink TRP, the first network device is a network device associated with the single-uplink TRP, and may also be referred to as a macro base station, and the first network device may be used by the terminal device to perform downlink reception) and the network device does not perform joint reception with the single-uplink TRP, or when the terminal device performs uplink communication only with the second network device with better signal reception quality, because a main function of the single-uplink TRP is to supplement uplink coverage, a path loss of the terminal device facing the single-uplink TRP is usually less than a path loss of the terminal device facing the macro base station. In this case, a value of β_{PL} is greater than 0 and less than 1, and a favorable compromise between facing the macro base station and facing the single-uplink TRP can be implemented. However, in a scenario in which a single-uplink TRP is deployed, when the single-uplink TRP performs joint reception with the macro base station, and the terminal is closer to the macro base station, a path loss of the terminal device facing the single-uplink TRP is greater than a path loss facing the macro base station, or when the second network device is a single-uplink device and the terminal device performs uplink communication with both the first network device and the second network device, a value of β_{PL} is greater than 1, and a favorable compromise between the macro base station and the single-uplink TRP is implemented. In short, in the solution provided in this application, adaptation to different communication scenarios may be implemented by adjusting a value range of β_{PL}, and flexibility is high.

It should be understood that the foregoing value setting condition of β_{PL} is merely an example. In actual implementation, in another possible value setting condition, β_{PL} may also use the foregoing value range. This is not limited in this application.

Optionally, in actual implementation, the first network device may perform bit quantization on the value of β_{PL} to obtain quantized β_{PL}, and indicate the quantized β_{PL} by the target information. For example, a value interval range of the quantized β_{PL} may be [0,0.4,0.5,0.6,0.7,0.8,0.9,1]∘[1,2,3,4,5,6,7,8,9,10], where "[a]∘[b]" indicates a Cartesian product of a and b. Alternatively, in actual implementation, a value range of β_{PL} may be between (0,10], and bit quantization is performed according to a specific rule.

In a third optional implementation, the correction parameter may specifically include a first correction parameter and a second correction parameter. In this case, for a specific process in which the first network device determines the first correction parameter and the second correction parameter and descriptions of a value of the first correction parameter and a value of the second correction parameter, refer to the foregoing corresponding processes. Details are not described herein again.

It should be understood that the foregoing process in which the first network device determines the correction parameter is merely an example. In actual implementation, the first network device may alternatively determine the correction parameter in another manner. This is not specifically limited in this application.

S202: The first network device sends the target information to the terminal device. Correspondingly, the terminal device receives the target information.

In some feasible implementations, after determining the target information, the first network device may generate a message including the target information, and send the message to the terminal device. Correspondingly, the terminal device may receive the message from the first network device, extract the target information from the message, and determine the correction parameter based on the target information.

Optionally, the target information may be transmitted between the first network device and the terminal device through an RRC message, a DCI message, or the like. A specific manner of transmitting the target information between the first network device and the terminal device is not limited in this application.

S203: The terminal device determines the target transmit power for sending the target signal to the second network device.

In some feasible implementations, after obtaining the correction parameter, the terminal device may correct, based on the correction parameter, a path loss estimation result that is between the second network device and the terminal device and that is obtained by the terminal device, to obtain a downlink path loss correction result. The terminal device may determine, based on the downlink path loss correction result, the target transmit power for sending the target signal to the second network device. The path loss estimation result may be determined by the terminal device based on a path loss compensation factor configured (or delivered) by the first network device, and/or a downlink path loss estimation value obtained by the terminal device by measuring a downlink reference signal of the first network device.

It should be understood that the path loss compensation factor (which is assumed as α herein) is usually configured by the first network device through a radio resource control (Radio Resource Control, RRC) message. For example, a pseudocode of the path loss compensation factor may be Alpha::=ENUMERATED {alpha0, alpha04, alpha05, alpha06, alpha07, alpha08, alpha09, alpha1}, where Alpha is an RRC variable name, and ENUMERATED represents a quantized value of the path loss compensation factor α.

The downlink path loss estimation value (which is assumed as PL herein) is usually a downlink path loss estimation value obtained by the terminal device by calculating an index value of the downlink reference signal of the first network device, and the downlink path loss estimation value is used as a path loss compensation value for uplink power control. Herein, the downlink reference signal of the first network device may include a synchronization signal and a PBCH block (namely, an SS/PBCH block) or a channel state information-reference signal (channel state information-reference signal, CSI-RS) resource. Herein, the downlink path loss estimation value PL satisfies the following relationship: PL=referenceSignalPower-higher layer filtered RSRP. referenceSignalPower indicates transmit power that is of the downlink reference signal and that is configured through higher layer signaling, and higher layer filtered RSRP indicates received power that is of the downlink reference signal received by the terminal device and that is obtained through higher layer filtering.

With reference to the foregoing three cases in which the correction parameter includes the first correction parameter, the correction parameter includes the second correction parameter, and the correction parameter includes the first correction parameter and the second correction parameter, the following separately describes a specific process in which the terminal device determines the target transmit power.

Case 1: The correction parameter includes the first correction parameter.

In this case, the terminal device may first determine the downlink path loss correction result based on the first correction parameter.

In a first optional implementation, the downlink path loss correction result satisfies the following formula: ${P}_{X} = α \times \left(PL+{PL}_{offset}\right)$

P_{X} is the downlink path loss correction result, α is the path loss compensation factor, PL is the downlink path loss estimation value, and PL_{offset} is the first correction parameter. In this case, α × PL may be understood as the downlink path loss estimation result described above. In other words, the terminal device may calculate the downlink path loss correction result according to the formula (1).

In a second optional implementation, the downlink path loss correction result satisfies the following formula: ${P}_{X} = PL + {PL}_{offset}$

P_{X} is the downlink path loss correction result, PL is the downlink path loss estimation value, and PL_{offset} is the first correction parameter. In this case, PL may be understood as the downlink path loss estimation result described above.

Case 2: The correction parameter includes the second correction parameter.

In this case, the terminal device may first determine the downlink path loss correction result based on the second correction parameter.

In a first optional implementation, the downlink path loss correction result satisfies the following formula: ${P}_{X} = α \times PL \times {β}_{PL}$

P_{X} is the downlink path loss correction result, α is the path loss compensation factor, PL is the downlink path loss estimation value, and β_{PL} is the second correction parameter. In this case, α × PL may be understood as the downlink path loss estimation result described above.

In a second optional implementation, the downlink path loss correction result satisfies the following formula: ${P}_{X} = PL \times {β}_{PL}$

P_{X} is the downlink path loss correction result, PL is the downlink path loss estimation value, and β_{PL} is the second correction parameter. In this case, PL may be understood as the downlink path loss estimation result described above.

Case 3: The correction parameter includes the first correction parameter and the second correction parameter.

In this case, the terminal device may first determine the downlink path loss correction result based on the first correction parameter and the second correction parameter.

In a first optional implementation, the downlink path loss correction result satisfies the following formula: ${P}_{X} = α \times PL + {PL}_{offset} \times {β}_{PL}$

P_{X} is the downlink path loss correction result, α is the path loss compensation factor, PL is the downlink path loss estimation value, PL_{offset} is the first correction parameter, and β_{PL} is the second correction parameter. In this case, α × PL may be understood as the downlink path loss estimation result described above.

In a second optional implementation, the downlink path loss correction result satisfies the following formula: ${P}_{X} = PL + {PL}_{offset} \times {β}_{PL}$

P_{X} is the downlink path loss correction result, PL is the downlink path loss estimation value, PL_{offset} is the first correction parameter, and β_{PL} is the second correction parameter. In this case, PL may be understood as the downlink path loss estimation result described above.

Further, the terminal device may determine, based on the downlink path loss correction result calculated by the terminal device, the target transmit power for sending the target signal to the second network device.

In a first optional implementation, the target signal may include an SRS.

In this case, the terminal device may calculate the target transmit power according to the following formula with reference to the downlink path loss correction result P_{X}. ${P}_{SRS , b , f , c} \left(i{, q}_{s},l\right) = min \left\{\begin{matrix}{P}_{CMAX , f , c} \left(i\right) , \\ {P}_{O_SRS , b , f , c} \left({q}_{s}\right) + 10 {log}_{10} \left({2}^{μ}⋅{M}_{SRS , b , f , c}\left(i\right)\right) + {P}_{X} + {h}_{b , f , c} \left(i, l\right)\end{matrix}\right\}$

P_{SRS,b,f,c}(i, qₛ, l) is the target transmit power. It should be understood that, herein, an example in which the terminal device sends the SRS in a serving cell c, on a carrier f, and on an uplink active bandwidth part (bandwidth part, BWP) whose ID b is used. This is the same in the following.

P_{CMAX,f,c}(i) is maximum output power configured by the terminal device when the serving cell is c, the carrier is f, and a transmission occasion of the SRS is i. The maximum output power is related to a sending capability of the terminal device.

P_{O_SRS,b,f,c}(qₛ) is a target receive power value of the SRS in the serving cell c, on the carrier f, and on the BWP whose ID is b. qₛ is an ID of an SRS resource set.

M_{SRS,b,f,c}(i) is a quantity of resource blocks (resource blocks, RBs) occupied by the SRS in the serving cell c, on the carrier f, on the BWP whose ID is b, and the transmission occasion is i.

µ is a value corresponding to a subcarrier spacing (subcarrier spacing, SCS) configuration.

P_{X} is the downlink path loss correction result calculated according to the formula (1), the formula (3), or the formula (5).

In a second optional implementation, the target signal may include a signal transmitted through a physical uplink shared channel (physical uplink shared channel, PUSCH).

In this case, the terminal device may calculate the target transmit power according to the following formula with reference to the downlink path loss correction result P_{X}. ${P}_{PUSCH , b , f , c} \left(i,j{, q}_{d},l\right) = min \left\{\begin{matrix}{P}_{CMAX , f , c} \left(i\right) , \\ {P}_{0 _PUSCH , b , f , c} \left(j\right) + 10 {log}_{10} \left({2}^{μ}⋅{M}_{RB , b , f , c}^{PUSCH}\left(i\right)\right) + {P}_{X} + {Δ}_{TF , b , f , c} \left(i\right) + {f}_{b , f , c} \left(i, l\right)\end{matrix}\right\}$

P_{PUSCH,b,f,c}(i, j, q_{d}, l) is the target transmit power. It should be understood that herein, an example in which the terminal device sends the target signal in a serving cell c, on a carrier f, and on a BWP whose ID is b is used. This is the same in the following. j is a parameter set configuration (that is, parameter set configuration) index. When j=0, an uplink grant configuration (namely, ConfiguredGrantConfig) indicates uplink power control for the PUSCH carrying a msg3 (4-step RA) or a msgA (2-step RA). When j=1, ConfiguredGrantConfig indicates uplink power control for the PUSCH during scheduling configuration. In addition, a value of j is greater than or equal to 2, and ConfiguredGrantConfig indicates power control in a normal case.

P_{CMAX,f,c}(i) is maximum output power configured by the terminal device when the serving cell is c, the carrier is f, and a transmission occasion of the target signal is i. The maximum output power is related to a sending capability of the terminal device.

P_{O_PUSCH,b,f,c}(j) is a target receive power value of the target signal in the serving cell c, on the carrier f, and on the BWP whose ID is b.${M}_{RB , b , f , c}^{PUSCH} \left(i\right)$ is a quantity of resource blocks (resource blocks, RBs) occupied by the target signal in the serving cell c, on the carrier f, on the BWP whose ID is b, and the transmission occasion is i.

µ is a value corresponding to a subcarrier spacing (subcarrier spacing, SCS) configuration.

P_{X} is the downlink path loss correction result calculated according to the formula (1), the formula (3), or the formula (5).

f_{b,f,c}(i, l) is a closed-loop control parameter, and is a dynamic power adjustment amount indicated by the first network device by downlink control information (downlink control information, DCI).

Δ_{TF,b,f,c}(i) indicates a PUSCH transmit power adjustment amount. A value of the adjustment amount is related to a format of the PUSCH.

In a third optional implementation, the target signal may include a signal transmitted through a physical uplink control channel (physical uplink control channel, PUCCH).

In this case, the terminal device may calculate the target transmit power according to the following formula with reference to the downlink path loss correction result P_{X}. ${P}_{PUCCH , b , f , c} \left(i, {q}_{u}, {q}_{d}, l\right) = min \left\{\begin{matrix}{P}_{CMAX , f , c} \left(i\right) , \\ {P}_{O _ PUCCH , b , f , c} \left(j\right) + 10 {log}_{10} \left({2}^{μ}⋅{M}_{RB , b , f , c}^{PUCCH}\left(i\right)\right) + {P}_{X} + {Δ}_{F _ PUCCH} \left(i\right) + {g}_{b , f , c} \left(i, l\right)\end{matrix}\right\}$

P_{PUCCH,b,f,c}(i, qᵤ, q_{d}, l) is the target transmit power. It should be understood that herein, an example in which the terminal device sends the target signal in a serving cell c, on a carrier f, and on a BWP whose ID is b is used. This is the same in the following. j is a parameter set configuration (that is, parameter set configuration) index. When j=0, an uplink grant configuration (namely, ConfiguredGrantConfig) indicates uplink power control for the PUSCH carrying a msg3 (4-step RA) or a msgA (2-step RA). When j=1, ConfiguredGrantConfig indicates uplink power control for the PUSCH during scheduling configuration. In addition, a value of j is greater than or equal to 2, and ConfiguredGrantConfig indicates power control in a normal case.

P_{CMAX,f,c}(i) is maximum output power configured by the terminal device when the serving cell is c, the carrier is f, and a transmission occasion of the target signal is i. The maximum output power is related to a sending capability of the terminal device.

P_{O_PUCCH,b,f,c}(j) is a target receive power value of the target signal in the serving cell c, on the carrier f, and on the BWP whose ID is b.${M}_{RB , b , f , c}^{PUCCH}$ is a quantity of resource blocks (resource blocks, RBs) occupied by the target signal in the serving cell c, on the carrier f, on the BWP whose ID is b, and the transmission occasion is i.

µ is a value corresponding to a subcarrier spacing (subcarrier spacing, SCS) configuration.

P_{X} is the downlink path loss correction result calculated according to the formula (2), the formula (4), or the formula (6).

g_{b,f,c}(i, l) is a closed-loop control parameter, and is a dynamic power adjustment amount indicated by the first network device by DCI.

Δ_{F_PUCCH}(i) indicates a PUCCH transmit power adjustment amount. A value of the adjustment amount is related to a format of the PUCCH.

Further, after calculating the target transmit power according to the formula (7), the formula (8), or the formula (9), the terminal device may send the target signal to the second network device based on the target transmit power.

It should be noted that the foregoing description of the type of the target signal is merely an example. In actual implementation, when the target signal is a signal of another type other than the foregoing type, the terminal device may also calculate the target transmit power according to the formula (7), the formula (8), or the formula (9). This is not specifically limited in this application.

In the communication method provided in this application, the terminal device corrects the downlink path loss estimation result with reference to the correction parameter configured by the first network device, so that the target transmit power determined by the terminal device can be more proper and reliable, and impact caused by the path loss and shadow fading can be more effectively compensated. Uplink transmit power for a single-uplink TRP is determined by using the method provided in this application, so that a problem that the determined transmit power may be excessively high or excessively low in an existing solution can be resolved, and transmission quality of an uplink between the terminal device and the single-uplink TRP can be ensured.

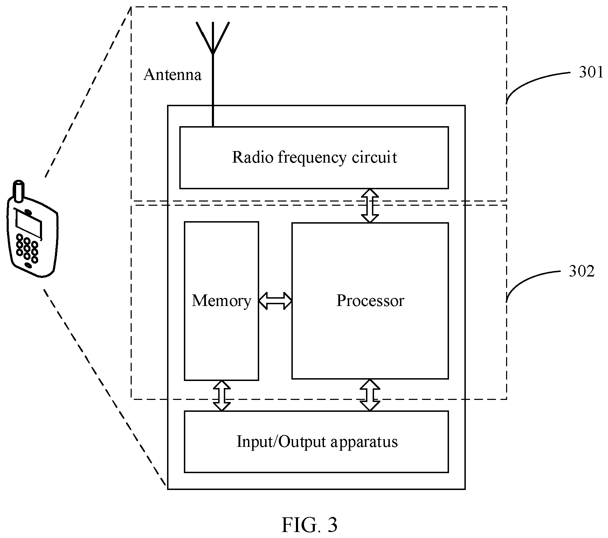

The foregoing describes in detail the method in embodiments of this application with reference to FIG. 1 and FIG. 2. The following describes in detail communication apparatuses in this application with reference to FIG. 3 to FIG. 5.

FIG. 3 is a diagram of a structure of a communication apparatus according to this application. The communication apparatus may be the terminal device in the foregoing embodiments, or may be an internal element or module of the terminal device.

The communication apparatus may include one or more transceiver units 301 and one or more processing units 302. The transceiver unit 301 may be referred to as a transceiver machine, a transceiver circuit, a transceiver, or the like, and may include at least one antenna and a radio frequency circuit. The transceiver unit 301 is mainly configured to receive and send a radio frequency signal and perform conversion between the radio frequency signal and a baseband signal, for example, configured to receive indication information from a network apparatus. The processing unit 302 is mainly configured to perform baseband processing, control the communication apparatus, and the like. The transceiver unit 301 and the processing unit 302 may be physically disposed together, or may be physically disposed separately. To be specific, the apparatus is a distributed apparatus. In specific implementation, the transceiver unit 301 may include one or more boards. A plurality of boards may jointly support a radio access network of a single access standard, or may separately support radio access networks of different access standards. The processing unit 302 further includes a memory and a processor. The memory is configured to store necessary instructions and data. The processor is configured to control the communication apparatus to perform a necessary action, for example, configured to control the communication apparatus to perform a related operation procedure of the terminal device in Embodiment 1. The memory and the processor may serve one or more boards. In other words, a memory and a processor may be disposed on each board. Alternatively, a plurality of boards may share a same memory and a same processor. In addition, a necessary circuit may further be disposed on each board. Further, the communication apparatus may further include an input/output apparatus, for example, a touchscreen, a display screen, or a keyboard, and is mainly configured to: receive data input by a user using the apparatus and output data to the user. It should be noted that, in some scenarios, the communication apparatus may not include the input/output apparatus.

In specific implementation, the transceiver unit 301 is configured to receive target information from a first network device. The target information indicates a correction parameter. The processing unit 302 is configured to determine target transmit power for sending a target signal to a second network device, where the target transmit power is determined based on a downlink path loss correction result, the downlink path loss correction result is determined based on the correction parameter and a downlink path loss estimation result, and the downlink path loss estimation result is determined based on a path loss compensation factor configured by the first network device and/or a downlink path loss estimation value obtained by the terminal device by measuring a downlink reference signal of the first network device.

In a possible implementation, the correction parameter includes a first correction parameter, and the downlink path loss correction result satisfies the following formula: ${P}_{X} = α \times \left(PL+{PL}_{offset}\right)$

P_{X} is the downlink path loss correction result, α is the path loss compensation factor, PL is the downlink path loss estimation value, and PL_{offset} is the first correction parameter.

In a possible implementation, the correction parameter includes a first correction parameter, and the downlink path loss correction result satisfies the following formula: ${P}_{X} = PL + {PL}_{offset}$

P_{X} is the downlink path loss correction result, PL is the downlink path loss estimation value, and PL_{offset} is the first correction parameter.

In a possible implementation, the second network device is a single-uplink device and the first network device and the second network device do not perform joint reception, or the second network device is a single-uplink device, the terminal device performs uplink communication only with the second network device and signal reception quality of the second network device is higher than signal reception quality of the first network device, and a value of PL_{offset} is less than 0.

In a possible implementation, the second network device is a single-uplink device, and the first network device and the second network device perform joint reception and a transmission loss between the terminal device and the first network device is less than a transmission loss between the terminal device and the second network device, or the second network device is a single-uplink device and the terminal device performs uplink communication with both the first network device and the second network device, and a value of PL_{offset} is greater than 0.

In a possible implementation, the second network device is a non-single-uplink device, or the second network device and the first network device are a same device, or the second network device is a single-uplink device, the terminal device performs uplink communication only with the first network device and signal reception quality of the first network device is higher than signal reception quality of the second network device, and a value of PL_{offset} is 0.

In a possible implementation, the correction parameter includes a second correction parameter, and the downlink path loss correction result satisfies the following formula: ${P}_{X} = α \times PL \times {β}_{PL}$

P_{X} is the downlink path loss correction result, α is the path loss compensation factor, PL is the downlink path loss estimation value, and β_{PL} is the second correction parameter.

In a possible implementation, the correction parameter includes a second correction parameter, and the downlink path loss correction result satisfies the following formula: ${P}_{X} = PL \times {β}_{PL}$

P_{X} is the downlink path loss correction result, PL is the downlink path loss estimation value, and β_{PL} is the second correction parameter.

In a possible implementation, the second network device is a single-uplink device and the first network device and the second network device do not perform joint reception, or the second network device is a single-uplink device, the terminal device performs uplink communication only with the second network device and signal reception quality of the second network device is higher than signal reception quality of the first network device, and a value of β_{PL} is greater than 0 and less than 1.

In a possible implementation, the second network device is a single-uplink device, and the first network device and the second network device perform joint reception and a transmission loss between the terminal device and the first network device is less than a transmission loss between the terminal device and the second network device, or the second network device is a single-uplink device and the terminal device performs uplink communication with both the first network device and the second network device, and a value of β_{PL} is greater than 1.

In a possible implementation, the second network device is a non-single-uplink device, or the second network device and the first network device are a same device, or the second network device is a single-uplink device, the terminal device performs uplink communication only with the first network device and signal reception quality of the first network device is higher than signal reception quality of the second network device, and a value of β_{PL} is 1.

In a possible implementation, the correction parameter includes a first correction parameter and a second correction parameter, and the downlink path loss correction result satisfies the following formula: ${P}_{X} = α \times PL + {PL}_{offset} \times {β}_{PL}$

P_{X} is the downlink path loss correction result, α is the path loss compensation factor, PL is the downlink path loss estimation value, PL_{offset} is the first correction parameter, and β_{PL} is the second correction parameter.

In a possible implementation, the correction parameter includes a first correction parameter and a second correction parameter, and the downlink path loss correction result satisfies the following formula: ${P}_{X} = PL + {PL}_{offset} \times {β}_{PL}$

P_{X} is the downlink path loss correction result, PL is the downlink path loss estimation value, PL_{offset} is the first correction parameter, and β_{PL} is the second correction parameter.

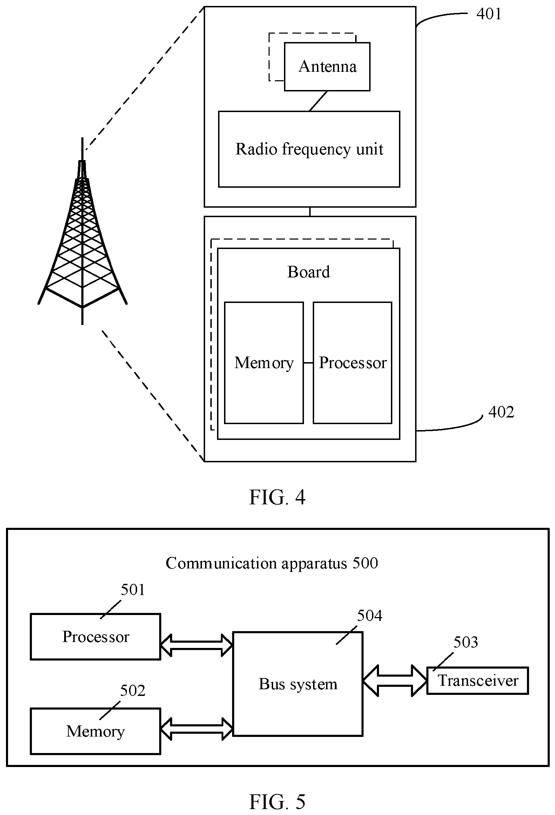

FIG. 4 is a diagram of a structure of still another communication apparatus according to this application. The communication apparatus may be configured to perform a function of the first network device in the foregoing embodiment. The communication apparatus may be the first network apparatus, or may be an element or a module inside the first network device. For ease of description, FIG. 4 shows only main components of the communication apparatus. It can be learned from FIG. 4 that the communication apparatus includes modules such as a processor, a memory, a radio frequency unit, and an antenna. The processor is mainly configured to: process a communication protocol and communication data, and control the communication apparatus to execute a software program, process data of the software program, and the like. The memory is mainly configured to store the software program and data. The radio frequency unit is mainly configured to perform conversion between a baseband signal to a radio frequency signal, and process the radio frequency signal. The antenna is mainly configured to receive and send a radio frequency signal in a form of an electromagnetic wave.

When needing to send data, after performing baseband processing on the to-be-sent data, the processor outputs a baseband signal to the radio frequency unit; and the radio frequency unit performs radio frequency processing on the baseband signal and then sends the radio frequency signal to the outside in a form of an electromagnetic wave through the antenna. When data is sent to the communication apparatus, the radio frequency unit receives a radio frequency signal through the antenna, converts the radio frequency signal into a baseband signal, and outputs the baseband signal to the processor. The processor converts the baseband signal into data, and processes the data. For ease of description, FIG. 4 shows only one memory and one processor. In an actual apparatus product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna having receiving and sending functions and the radio frequency unit may be considered as a transceiver unit of the communication apparatus, and the processor having a processing function may be considered as a processing unit of the communication apparatus. As shown in FIG. 4, the communication apparatus includes a transceiver unit 401 and a processing unit 402. Optionally, a component for implementing a receiving function in the transceiver unit 401 may be considered as a receiving unit, and a component for implementing a sending function in the transceiver unit 401 may be considered as a sending unit. That is, the transceiver unit 401 includes a receiving unit and a sending unit. The receiving unit herein sometimes may also be referred to as a receiver machine, a receiver, a receiver circuit, or the like. The sending unit sometimes may also be referred to as a transmitter machine, a transmitter, a transmit circuit, or the like.

In specific implementation, the processing unit 402 is configured to determine target information indicating a correction parameter. The correction parameter and a downlink path loss estimation result are used to determine a downlink path loss correction result, the downlink path loss correction result is used to determine target transmit power for sending a target signal by a terminal device to a second network device, and the downlink path loss estimation result is determined based on a path loss compensation factor configured by the first network device and/or a downlink path loss estimation value obtained by the terminal device by measuring a downlink reference signal of the first network device. The transceiver unit 401 is configured to send the target information to the terminal device.

In a possible implementation, the correction parameter includes a first correction parameter, and the downlink path loss correction result satisfies the following formula: ${P}_{X} = α \times \left(PL+{PL}_{offset}\right)$

P_{X} is the downlink path loss correction result, α is the path loss compensation factor, PL is the downlink path loss estimation value, and PL_{offset} is the first correction parameter.

In a possible implementation, the correction parameter includes a first correction parameter, and the downlink path loss correction result satisfies the following formula: ${P}_{X} = PL + {PL}_{offset}$

P_{X} is the downlink path loss correction result, PL is the downlink path loss estimation value, and PL_{offset} is the first correction parameter.

In a possible implementation, the second network device is a single-uplink device and the first network device and the second network device do not perform joint reception, or the second network device is a single-uplink device, the terminal device performs uplink communication only with the second network device and signal reception quality of the second network device is higher than signal reception quality of the first network device, and a value of PL_{offset} is less than 0.

In a possible implementation, the second network device is a single-uplink device, and the first network device and the second network device perform joint reception and a transmission loss between the terminal device and the first network device is less than a transmission loss between the terminal device and the second network device, or the second network device is a single-uplink device and the terminal device performs uplink communication with both the first network device and the second network device, and a value of PL_{offset} is greater than 0.

In a possible implementation, the second network device is a non-single-uplink device, or the second network device and the first network device are a same device, or the second network device is a single-uplink device, the terminal device performs uplink communication only with the first network device and signal reception quality of the first network device is higher than signal reception quality of the second network device, and a value of PL_{offset} is 0.

In a possible implementation, the correction parameter includes a second correction parameter, and the downlink path loss correction result satisfies the following formula: ${P}_{X} = α \times PL \times {β}_{PL}$

P_{X} is the downlink path loss correction result, α is the path loss compensation factor, PL is the downlink path loss estimation value, and β_{PL} is the second correction parameter.

In a possible implementation, the correction parameter includes a second correction parameter, and the downlink path loss correction result satisfies the following formula: ${P}_{X} = PL \times {β}_{PL}$

P_{X} is the downlink path loss correction result, PL is the downlink path loss estimation value, and β_{PL} is the second correction parameter.

In a possible implementation, the second network device is a single-uplink device and the first network device and the second network device do not perform joint reception, or the second network device is a single-uplink device, the terminal device performs uplink communication only with the second network device and signal reception quality of the second network device is higher than signal reception quality of the first network device, and a value of β_{PL} is greater than 0 and less than 1.

In a possible implementation, the second network device is a single-uplink device, and the first network device and the second network device perform joint reception and a transmission loss between the terminal device and the first network device is less than a transmission loss between the terminal device and the second network device, or the second network device is a single-uplink device and the terminal device performs uplink communication with both the first network device and the second network device, and a value of β_{PL} is greater than 1.

In a possible implementation, the second network device is a non-single-uplink device, or the second network device and the first network device are a same device, or the second network device is a single-uplink device, the terminal device performs uplink communication only with the first network device and signal reception quality of the first network device is higher than signal reception quality of the second network device, and a value of β_{PL} is 1.

In a possible implementation, the correction parameter includes a first correction parameter and a second correction parameter, and the downlink path loss correction result satisfies the following formula: ${P}_{X} = α \times PL + {PL}_{offset} \times {β}_{PL}$

P_{X} is the downlink path loss correction result, α is the path loss compensation factor, PL is the downlink path loss estimation value, PL_{offset} is the first correction parameter, and β_{PL} is the second correction parameter.

In a possible implementation, the correction parameter includes a first correction parameter and a second correction parameter, and the downlink path loss correction result satisfies the following formula: ${P}_{X} = PL + {PL}_{offset} \times {β}_{PL}$

P_{X} is the downlink path loss correction result, PL is the downlink path loss estimation value, PL_{offset} is the first correction parameter, and β_{PL} is the second correction parameter.

FIG. 5 is a diagram of a structure of still another communication apparatus according to this application. A communication apparatus 500 may be configured to implement an operation performed by the terminal device in the foregoing embodiment, or a communication apparatus 500 may be the terminal device described above. The communication apparatus 500 includes a processor 501, a memory 502, and a bus system 504.

The memory 502 includes but is not limited to a RAM, a ROM, an EPROM, or a CD-ROM. The memory 502 is configured to store related instructions and data. The memory 502 stores the following elements: an executable module or a data structure, or a subset thereof, or an extended set thereof:
operation instructions, including various operation instructions and used to implement various operations; and
an operating system, including various system programs and configured to implement various basic services and process a hardware-based task.

Only one memory is shown in FIG. 5. Certainly, a plurality of memories may be disposed based on a requirement.

A transceiver 503 may be further included. The transceiver 503 may be a communication module or a transceiver circuit. In this embodiment of this application, the transceiver 503 is configured to perform operations such as receiving the information in the foregoing embodiments.

The processor 501 may be a controller, a CPU, a general-purpose processor, a DSP, an ASIC, an FPGA or another programmable logic device, a transistor logic device, a hardware component, or any combination thereof. Alternatively, the processor 501 may be a combination implementing a computing function, for example, a combination including one or more microprocessors, or a combination of the DSP and the microprocessor.

In specific application, components of the communication apparatus 500 are coupled together via the bus system 504. In addition to a data bus, the bus system 504 may further include a power bus, a control bus, a status signal bus, and the like. However, for clarity of description, various buses are denoted as the bus system 504 in FIG. 5. For ease of representation, only illustrative depiction is provided in FIG. 5.

In specific implementation, the communication apparatus 500 may perform the steps of the method performed by the terminal device in the foregoing embodiments. Specifically, when the communication apparatus 500 is configured to implement the steps performed by the terminal device in the communication method provided in embodiments, the processor 501 may implement a function of the processing unit 302, and the transceiver 503 may be configured to implement a function of the transceiver unit 301.

Still refer to FIG. 5. The communication apparatus 500 may be further configured to implement an operation performed by the first network device in the foregoing embodiment. Alternatively, the communication apparatus 500 may be the first network device described above.

In specific implementation, when the communication apparatus 500 is configured to implement the steps performed by the first network device in the communication method provided in embodiments, the processor 501 may implement a function of the processing unit 402, and the transceiver 503 may be configured to implement a function of the transceiver unit 401.

It should be noted that, during actual application, the processor in this embodiment of this application may be an integrated circuit chip, and has a signal processing capability. In an implementation process, steps in the foregoing method embodiments can be implemented by using a hardware integrated logical circuit in the processor, or by using instructions in a form of software. The processor may be a general-purpose processor, a digital signal processor (digital signal Processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory described in embodiments of this application aims to include but is not limited to these memories and any memory of another proper type.

This application further provides a communication system, including one or more first network devices described above and one or more terminal devices described above.

This application further provides a computer-readable medium. The computer-readable medium stores a computer program. When the computer program is executed by a computer, the steps of the communication method performed by the terminal device in the foregoing embodiments are implemented.

This application further provides a computer program product. When the computer program product is executed by a computer, the steps of the communication method performed by the network device in the foregoing embodiments are implemented.

This application further provides a communication apparatus, including a processor and an interface. The processor is configured to implement the steps of the communication method performed by the terminal device or the network device in the foregoing embodiments. It should be understood that the communication apparatus may be a chip, and the processor may be implemented by hardware or software. When the processor is implemented by hardware, the processor may be a logic circuit, an integrated circuit, or the like. When the processor is implemented by using software, the processor may be a general purpose processor, and is implemented by reading software code stored in a memory. The memory may be integrated into the processor, or may be located outside the processor and exist independently.

This application further provides a chip system. The chip system includes a processor, configured to support an apparatus in which the chip system is installed in implementing the communication method performed by the terminal device or the network device, for example, generating or processing data and/or information in the foregoing method. In a possible design, the chip system further includes a memory. The memory is configured to store program instructions and data that are necessary for a data sending device. The chip system may include a chip, or may include a chip and another discrete component.

All or some of the foregoing method embodiments may be implemented by using software, hardware, firmware, or any combination thereof. When software is used to implement embodiments, all or a part of embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state drive (solid state drive, SSD)), or the like.

The foregoing descriptions are merely examples of embodiments of the technical solutions of this application, but are not intended to limit the protection scope of this application. Any modification, equivalent replacement, or improvement made without departing from the spirit and principle of this application shall fall within the protection scope of this application.

## Claims

1. A communication method, applied to a terminal device, wherein the method comprises:
receiving target information from a first network device, wherein the target information indicates a correction parameter; and
determining target transmit power for sending a target signal to a second network device, wherein the target transmit power is determined based on a downlink path loss correction result, the downlink path loss correction result is determined based on the correction parameter and a downlink path loss estimation result, and the downlink path loss estimation result is determined based on a path loss compensation factor configured by the first network device and/or a downlink path loss estimation value obtained by the terminal device by measuring a downlink reference signal of the first network device.

2. A communication method, applied to a first network device, wherein the method comprises:
determining target information indicating a correction parameter, wherein the correction parameter and a downlink path loss estimation result are used to determine a downlink path loss correction result, the downlink path loss correction result is used to determine target transmit power for sending a target signal by a terminal device to a second network device, and the downlink path loss estimation result is determined based on a path loss compensation factor configured by the first network device and/or a downlink path loss estimation value obtained by the terminal device by measuring a downlink reference signal of the first network device; and
sending the target information to the terminal device.

3. The method according to claim 1 or 2, wherein the correction parameter comprises a first correction parameter, and the downlink path loss correction result satisfies the following formula: ${P}_{X} = α \times \left(PL+{PL}_{offset}\right) ,$ wherein
P_{X} is the downlink path loss correction result, α is the path loss compensation factor, PL is the downlink path loss estimation value, and PL_{offset} is the first correction parameter.

4. The method according to claim 1 or 2, wherein the correction parameter comprises a first correction parameter, and the downlink path loss correction result satisfies the following formula: ${P}_{X} = PL + {PL}_{offset} ,$ wherein
P_{X} is the downlink path loss correction result, PL is the downlink path loss estimation value, and PL_{offset} is the first correction parameter.

5. The method according to claim 3 or 4, wherein the second network device is a single-uplink device and the first network device and the second network device do not perform joint reception, or the second network device is a single-uplink device, the terminal device performs uplink communication only with the second network device and signal reception quality of the second network device is higher than signal reception quality of the first network device, and a value of PL_{offset} is less than 0.

6. The method according to any one of claims 3 to 5, wherein the second network device is a single-uplink device, and the first network device and the second network device perform joint reception and a transmission loss between the terminal device and the first network device is less than a transmission loss between the terminal device and the second network device, or the second network device is a single-uplink device and the terminal device performs uplink communication with both the first network device and the second network device, and a value of PL_{offset} is greater than 0.

7. The method according to any one of claims 3 to 6, wherein the second network device is a non-single-uplink device, or the second network device and the first network device are a same device, or the second network device is a single-uplink device, the terminal device performs uplink communication only with the first network device and signal reception quality of the first network device is higher than signal reception quality of the second network device, and a value of PL_{offset} is 0.

8. The method according to claim 1 or 2, wherein the correction parameter comprises a second correction parameter, and the downlink path loss correction result satisfies the following formula: ${P}_{X} = α \times PL \times {β}_{PL} ,$ wherein
P_{X} is the downlink path loss correction result, α is the path loss compensation factor, PL is the downlink path loss estimation value, and β_{PL} is the second correction parameter.

9. The method according to claim 1 or 2, wherein the correction parameter comprises a second correction parameter, and the downlink path loss correction result satisfies the following formula: ${P}_{X} = PL \times {β}_{PL} ,$ wherein
P_{X} is the downlink path loss correction result, PL is the downlink path loss estimation value, and β_{PL} is the second correction parameter.

10. The method according to claim 8 or 9, wherein the second network device is a single-uplink device and the first network device and the second network device do not perform joint reception, or the second network device is a single-uplink device, the terminal device performs uplink communication only with the second network device and signal reception quality of the second network device is higher than signal reception quality of the first network device, and a value of β_{PL} is greater than 0 and less than 1.

11. The method according to any one of claims 8 to 10, wherein the second network device is a single-uplink device, and the first network device and the second network device perform joint reception and a transmission loss between the terminal device and the first network device is less than a transmission loss between the terminal device and the second network device, or the second network device is a single-uplink device and the terminal device performs uplink communication with both the first network device and the second network device, and a value of β_{PL} is greater than 1.

12. The method according to any one of claims 8 to 11, wherein the second network device is a non-single-uplink device, or the second network device and the first network device are a same device, or the second network device is a single-uplink device, the terminal device performs uplink communication only with the first network device and signal reception quality of the first network device is higher than signal reception quality of the second network device, and a value of β_{PL} is 1.

13. The method according to claim 1 or 2, wherein the correction parameter comprises a first correction parameter and a second correction parameter, and the downlink path loss correction result satisfies the following formula: ${P}_{X} = α \times PL + {PL}_{offset} \times {β}_{PL} ,$ wherein
P_{X} is the downlink path loss correction result, α is the path loss compensation factor, PL is the downlink path loss estimation value, PL_{offset} is the first correction parameter, and β_{PL} is the second correction parameter.

14. The method according to claim 1 or 2, wherein the correction parameter comprises a first correction parameter and a second correction parameter, and the downlink path loss correction result satisfies the following formula: ${P}_{X} = PL + {PL}_{offset} \times {β}_{PL} ,$ wherein
P_{X} is the downlink path loss correction result, PL is the downlink path loss estimation value, PL_{offset} is the first correction parameter, and β_{PL} is the second correction parameter.

15. The method according to claim 13 or 14, wherein the second network device is a single-uplink device and the first network device and the second network device do not perform joint reception, or the second network device is a single-uplink device, the terminal device performs uplink communication only with the second network device and signal reception quality of the second network device is higher than signal reception quality of the first network device, a value of β_{PL} is greater than 0 and less than 1, and a value of PL_{offset} is less than 0.

16. The method according to any one of claims 13 to 15, wherein the second network device is a single-uplink device, and the first network device and the second network device perform joint reception and a transmission loss between the terminal device and the first network device is less than a transmission loss between the terminal device and the second network device, or the second network device is a single-uplink device and the terminal device performs uplink communication with both the first network device and the second network device, a value of β_{PL} is greater than 1, and a value of PL_{offset} is greater than 0.

17. The method according to any one of claims 13 to 16, wherein the second network device is a non-single-uplink device, or the second network device and the first network device are a same device, or the second network device is a single-uplink device, the terminal device performs uplink communication only with the first network device and signal reception quality of the first network device is higher than signal reception quality of the second network device, a value of β_{PL} is 1, and a value of PL_{offset} is 0.

18. The method according to any one of claims 1 to 17, wherein the correction parameter is determined based on a difference between a path loss from the terminal device to the first network device and a path loss from the terminal device to the second network device, and/or a ratio of the path loss from the terminal device to the first network device to the path loss from the terminal device to the second network device.

19. A communication apparatus, wherein the communication apparatus comprises a transceiver unit and a processing unit;
the transceiver unit is configured to receive target information from a first network device, wherein the target information indicates a correction parameter; and
the processing unit is configured to determine target transmit power for sending a target signal to a second network device, wherein the target transmit power is determined based on a downlink path loss correction result, the downlink path loss correction result is determined based on the correction parameter and a downlink path loss estimation result, and the downlink path loss estimation result is determined based on a path loss compensation factor configured by the first network device and/or a downlink path loss estimation value obtained by the terminal device by measuring a downlink reference signal of the first network device.

20. A communication apparatus, wherein the communication apparatus comprises a transceiver unit and a processing unit;
the processing unit is configured to determine target information indicating a correction parameter, wherein the correction parameter and a downlink path loss estimation result are used to determine a downlink path loss correction result, the downlink path loss correction result is used to determine target transmit power for sending a target signal by a terminal device to a second network device, and the downlink path loss estimation result is determined based on a path loss compensation factor configured by the first network device and/or a downlink path loss estimation value obtained by the terminal device by measuring a downlink reference signal of the first network device; and
the transceiver unit is configured to send the target information to the terminal device.

21. A computer-readable storage medium, wherein the computer-readable storage medium stores a computer program; and when the computer program is run, the communication method according to any one of claims 1 to 17 is implemented.

22. A chip, comprising a processor and an interface, wherein
the processor is configured to read instructions to perform the communication method according to any one of claims 1 to 17.

23. A computer program product, wherein the computer program product is used by a computer to perform the communication method according to any one of claims 1 to 17.

24. A communication apparatus, comprising at least one processor and a memory, wherein
the memory is configured to store a computer program; and
the processor is configured to execute the computer program stored in the memory, so that the communication apparatus performs the communication method according to any one of claims 1 to 17.
